# EUROPEAN PATENT SPECIFICATION

(11) **EP 4 344 906 B1**
(45) Date of publication and mention of the grant of the patent: **11.06.2025**
(21) Application number: 23191643.8
(22) Date of filing: 16.08.2023
(51) Int. Cl.: B60C 13/00

(54) **PNEUMATIC TIRE**
LUFTREIFEN
PNEUMATIQUE

(30) Priority: 28.09.2022 JP 2022155364
(43) Date of publication of application: 03.04.2024
(73) Proprietor: Sumitomo Rubber Industries, Ltd., Kobe-shi, Hyogo 651-0072 (JP)
(72) Inventor: YAMADA, Yoshihiro, Kobe-shi, 651-0072 (JP); SAKAKIBARA, Yuta, Kobe-shi, 651-0072 (JP); ISHIDA, Naoki, Kobe-shi, 651-0072 (JP); MEGURU, Yuya, Kobe-shi, 651-0072 (JP)
(74) Representative: Manitz Finsterwald Patent- und Rechtsanwaltspartnerschaft mbB

(56) References cited:
- EP-A1- 3 698 988
- JP-A- 2015 077 930
- JP-A- S63 106 109
- US-A- 6 053 228
- US-A1- 2015 004 335
- US-B2- 7 409 975

## Description

### BACKGROUND OF THE INVENTION

### Field of the Invention

The present invention relates to a pneumatic tire.

### Background Art

Japanese Laid-Open Patent Publication No. 2020-125045 proposes a tire having a recessed mark provided on a sidewall portion. In the tire, a bottom surface of the recessed mark is divided into a shadow region where a shadow is formed by a wall portion of the recessed mark and a main region other than the shadow region. The shadow region has a plurality of micro projections to impart contrast between the shadow region and the main region, thereby enhancing the visibility of the recessed mark.

In the tire in Japanese Laid-Open Patent Publication No. 2020-125045, part of the contour of the main region is defined by the micro projections adjacent thereto, and thus the contour is not smooth, so that the appearance tends to deteriorate.

US 2015/0004335 A1 discloses a pneumatic tire comprising the features according to the preamble of claim 1.

JP S63 106109 A discloses a pneumatic tire comprising features according to a related technology.

EP 3 698 988 A1 also discloses a pneumatic tire comprising features according to a related technology.

The present invention has been made in view of the above circumstances, and a main object of the present invention is to provide a pneumatic tire having improved appearance of a marking portion on a sidewall portion.

### SUMMARY OF THE INVENTION

This object is satisfied by a pneumatic tire comprising the features of claim 1.

The pneumatic tire includes a pair of sidewall portions. In the pneumatic tire, at least one of outer surfaces of the pair of sidewall portions includes at least one marking portion, the marking portion includes a first region forming a mark including at least one character, at least one graphic, or at least one symbol, a second region that is a background portion of the mark, and a fringing portion that demarcates the first region from the second region and fringes a contour of the mark, the first region is formed as a smooth surface, the second region is a projection-recess region where a plurality of micro projections are arranged, and the fringing portion is a rib projecting from the first region.

As a result of adopting the above-described configuration, the pneumatic tire according to the present invention can improve the appearance of the marking portion of the sidewall portion.

### BRIEF DESCRIPTION OF THE DRAWINGS

FIG. 1 is an enlarged perspective view of a sidewall portion of a tire according to an embodiment;
FIG. 2 is an enlarged view of a marking portion in FIG. 1;
FIG. 3 is an enlarged perspective view of a region A in FIG. 2;
FIG. 4 is a sectional view taken along a B-B line in FIG. 2;
FIG. 5 is an enlarged plan view of a part of a second region; and
FIG. 6 is an enlarged perspective view conceptually showing the positional relationship between a rib and a plurality of micro projections.

### DETAILED DESCRIPTION

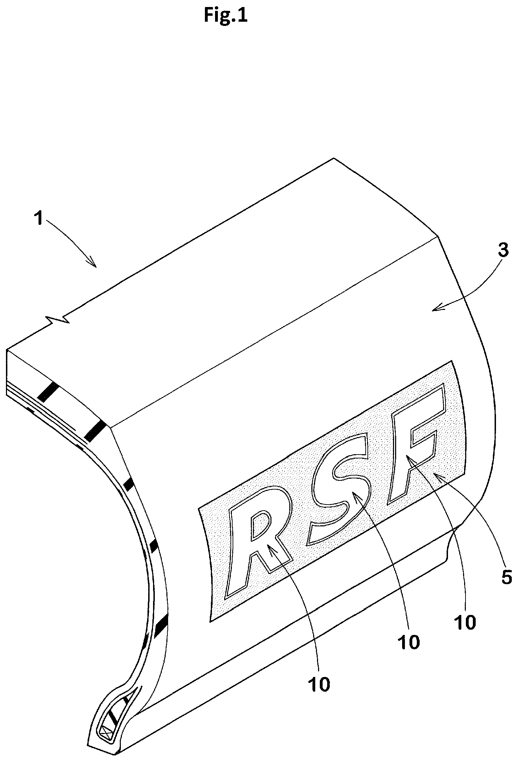

Hereinafter, one embodiment of the present invention will be described with reference to the drawings. FIG. 1 is an enlarged perspective view of a sidewall portion 3 of one embodiment of a pneumatic tire 1 (hereinafter, also referred to simply as "tire 1") according to the present invention. The tire 1 of the present invention has a pair of sidewall portions 3, and FIG. 1 shows a part of an outer surface of one of the sidewall portions 3. As shown in FIG. 1, the tire 1 of the present invention is, for example, used as a pneumatic tire for a passenger car. The present invention may be applied to a motorcycle tire or a heavy-duty tire, for example.

In the description herein, unless otherwise specified, dimensions of components of the tire 1 are measured in the standardized state. The "standardized state" represents a state in which a tire is fitted on a standardized rim and is inflated to a standardized internal pressure and no load is applied to the tire when the tire is a pneumatic tire for which various standards are defined. For tires for which various standards are not defined, the standardized state represents a standard use state, corresponding to a purpose of use of the tire, in which no load is applied to the tire.

The "standardized rim" represents a rim that is defined by a standard for each tire, in a standard system including the standard on which the tire is based, and is, for example, "standard rim" in the JATMA standard, "Design Rim" in the TRA standard, or "Measuring Rim" in the ETRTO standard.

The "standardized internal pressure" represents an air pressure that is defined by a standard for each tire, in a standard system including the standard on which the tire is based, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

As shown in FIG. 1, the sidewall portion 3 has a visible outer surface. The visible outer surface is a surface that is visible from the outside when the tire 1 is used. At least one of the outer surfaces of the pair of sidewall portions 3 is provided with at least one marking portion 5. A mark 10 is formed on the marking portion 5. The mark 10 includes at least one character, at least one graphic, or at least one symbol. The mark 10 of the present embodiment includes "R", "S", and "F" as one example, but the present invention is not limited thereto.

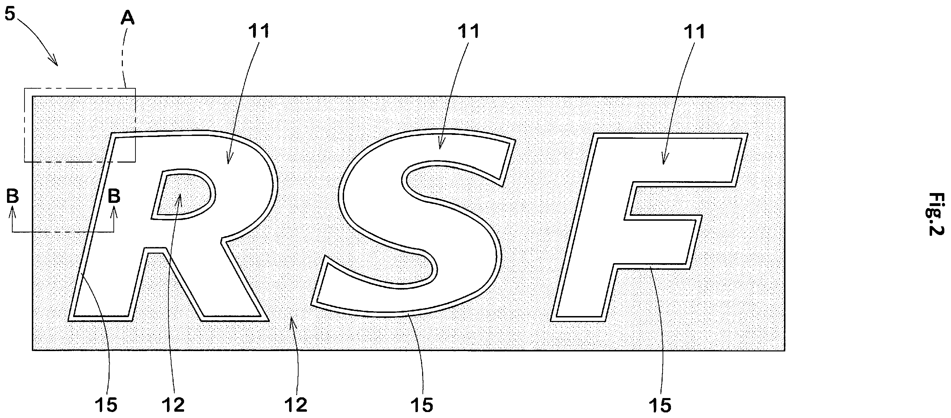

FIG. 2 is an enlarged view of the marking portion 5 in FIG. 1. As shown in FIG. 2, the marking portion 5 includes a first region 11 forming the mark 10, a second region 12 that is a background portion of the mark 10, and a fringing portion 15 that demarcates the first region 11 from the second region 12 and fringes the contour of the mark 10. In FIG. 2, the first region 11 is shown as a blank region, and the second region 12 is dotted. The fringing portion 15 is shown by thin double lines.

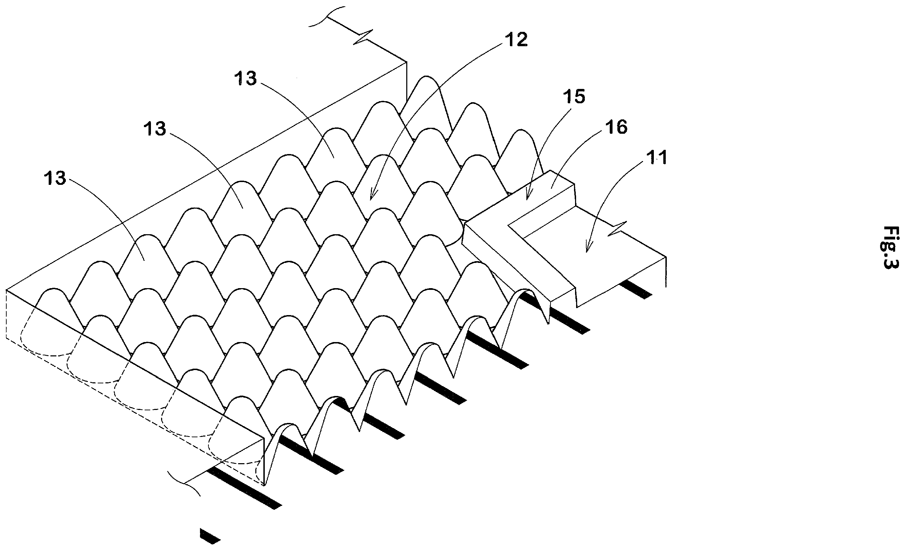

FIG. 3 is an enlarged perspective view of a region A in FIG. 2. As shown in FIG. 3, the first region 11 is formed as a smooth surface. On the other hand, the second region 12 is a projection-recess region where a plurality of micro projections 13 are arranged. The smooth surface of the first region 11 means an even surface enabling a sufficient contrast to be imparted with respect to the second region 12 described below. In a preferable aspect, the first region 11 has an arithmetic mean roughness Ra of not greater than 50 µm, for example.

The fringing portion 15 of the present invention is a rib 16 projecting from the first region 11. The "rib" is a protrusion projecting with respect to the first region 11, and means one that continuously extends along the contour of the mark 10 to have a longitudinal direction. Owing to the above-described configuration, the present invention can improve the appearance of the marking portion 5 (shown in FIG. 1) of the sidewall portion 3. The reason for this is as follows.

As shown in FIG. 2 and FIG. 3, in the present invention, the first region 11 is a smooth surface, so that more light is reflected to cause the first region 11 to look pale, but the plurality of micro projections 13 (shown in FIG. 3) inhibit reflection of light on the second region 12 to cause the second region 12 to look darker. Accordingly, the contrast between the first region 11 and the second region 12 is increased, thereby improving the visibility and the appearance of the mark 10. In addition to this, in the present invention, the fringing portion 15 is a rib projecting form the first region 11, and thus can prevent the contour of the mark 10 from forming an irregular wavy line, thereby improving the appearance of the marking portion 5.

In a conventional art, to prevent the contour of a mark from forming an irregular wavy line, a plurality of micro projections are arranged at equal intervals along the contour of a first region. However, in such a method, an arrangement of the micro projections needs to be determined for each mark, thereby increasing cost in design or processing of a vulcanization mold for a tire. In addition, the above method is relatively easily performed on a mark (e.g., "F" in the present embodiment) formed by only straight lines, but when the above method is performed on a mark (e.g., "R" or "S" in the present embodiment) including a curved line, a region where arrangement pitches of the micro projections are narrow and a region where arrangement pitches of the micro projections are wide are generated, and thus the appearance tends to deteriorate. In the present invention, the above-described fringing portion 15 is disposed, so that such a defect can be avoided.

Hereinafter, more detailed configurations of the present embodiment will be described. The configurations described below show a specific aspect of the present embodiment. Therefore, it is needless to say that the present invention can achieve the above-described effect even when the configurations described below are not provided. In addition, even when any one of the configurations described below is independently applied to the tire 1 according to the present invention having the above-described characteristics, performance improvement corresponding to each configuration can be expected. Furthermore, when some of the configurations described below are applied in combination, complex performance improvement corresponding to each configuration can be expected.

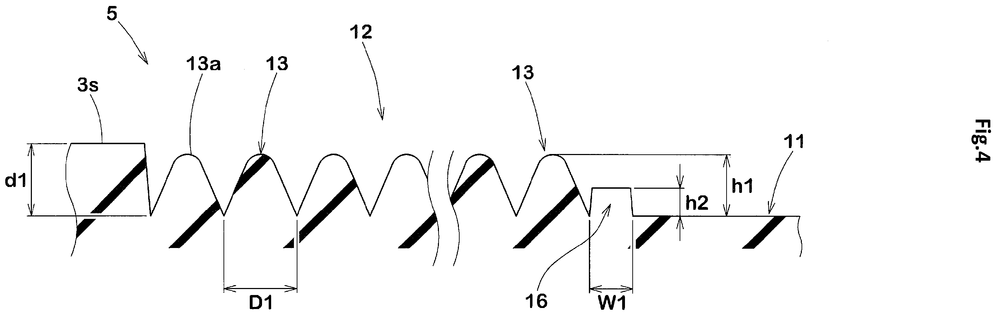

FIG. 4 is a sectional view of the marking portion 5. FIG. 4 corresponds to a sectional view taken along a B-B line in FIG. 2. As shown in FIG. 4, the marking portion 5 is preferably recessed with respect to a reference surface 3s of the outer surface of the sidewall portion 3 (shown in FIG. 1), for example. Accordingly, the appearance of the mark 10 (shown in FIG. 1) is improved, and a rubber volume of the sidewall portion 3 can be inhibited from increasing. However, the present invention is not limited thereto.

From the viewpoint of ensuring the durability of the sidewall portion 3, a recessed amount d1 of the marking portion 5 with respect to the reference surface 3s is preferably not larger than 1.5 mm.

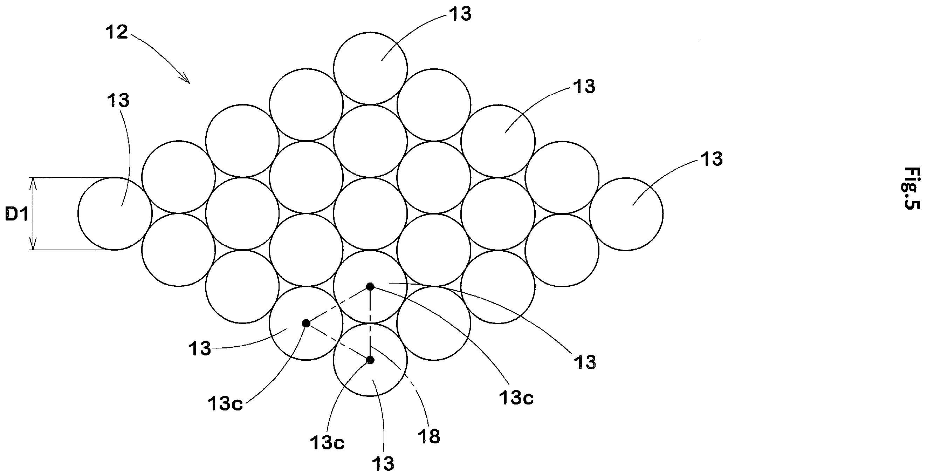

FIG. 5 is an enlarged plan view of a part of the second region 12. As shown in FIG. 5, the second region 12 preferably includes a portion where the plurality of micro projections 13 are arranged so as to form closest packing in a planar view. Accordingly, the amount of light reflected on the second region 12 is further decreased, the contrast with the first region 11 is increased, and thus the appearance of the marking portion 5 is improved.

The above-described "closest packing" at least means that the micro projections 13 are densely arranged in a state in which another micro projection 13 cannot be additionally arranged, because the contours of the adjacent micro projections 13 are in contact with each other. In the present embodiment, the contour of each micro projection 13 has a circular shape having a first maximum outer diameter D1, and the micro projections 13 are arranged so as to form closest packing. Accordingly, in a planar view of the second region 12, a virtual triangle 18 with centers 13c of the contours of three micro projections 13 adjacent to each other, as apexes, is an equilateral triangle. However, the arrangement of the micro projections 13 in the second region 12 of the present invention is not limited thereto.

In the second region 12, less than five micro projections 13 are arranged per mm², and preferably one to four micro projections 13 are arranged. Accordingly, the appearance of the marking portion 5 is further improved.

As shown in FIG. 3 and FIG. 4, each micro projection 13 is formed as a truncated cone in which an upper surface 13a (shown in FIG. 4) is composed of a curved surface. However, the micro projection 13 is not limited thereto, and various forms such as a cone shape and a cylinder shape can be used. In another embodiment, in the upper surface 13a of the micro projection 13, a local recess may be provided (not shown). Such micro projections 13 can further inhibit the reflection of light on the second region 12.

As shown in FIG. 4, the first maximum outer diameter D1 of each micro projection 13 is, for example, 0.3 to 1.0 mm, and preferably 0.5 to 0.7 mm. A maximum height h1 of the micro projection 13 with respect to the first region 11 is preferably smaller than the recessed amount d1 of the marking portion 5. Specifically, the height h1 is 0.3 to 1.0 mm, and preferably 0.4 to 0.8 mm. However, the micro projection 13 is not limited thereto.

The shape of a transverse cross-section of the rib 16 formed as the fringing portion 15 is, for example, a trapezoidal shape. However, the shape of the transverse cross-section is not limited thereto, and may be a triangular shape or a semi-circular shape. In addition, the rib 16 has a maximum rib width W1 orthogonal to the longitudinal direction thereof. The rib width W1 is preferably larger than 1/2 of the first maximum outer diameter D1 of the micro projection 13. Accordingly, the rib 16 is easily visually recognized, and the appearance of the mark 10 is further improved. On the other hand, when the rib width W1 is excessively large, the contour of the mark 10 may be unclear. Accordingly, the rib width W1 is preferably smaller than the first maximum outer diameter D1, and specifically not larger than 70% of the first maximum outer diameter D1.

According to the invention, a maximum height h2 of the rib 16 with respect to the first region 11 is not smaller than 10% of the maximum height h1 of the plurality of micro projections 13 with respect to the first region 11, and not larger than 80% thereof, and preferably not larger than 50% thereof.

From the viewpoint of clarifying the contour of the mark 10, preferably, the plurality of micro projections 13 adjacent to the rib 16 are orderly arranged along the longitudinal direction of the rib 16. However, depending on the shape of the mark 10, when such an arrangement is maintained, cost in design or processing of a vulcanization mold for a tire may be increased. From the viewpoint of reducing the cost, the plurality of micro projections 13 may include a micro projection 13 that is not directly connected to the rib 16, or a micro projection 13 that is partially connected to the rib 16.

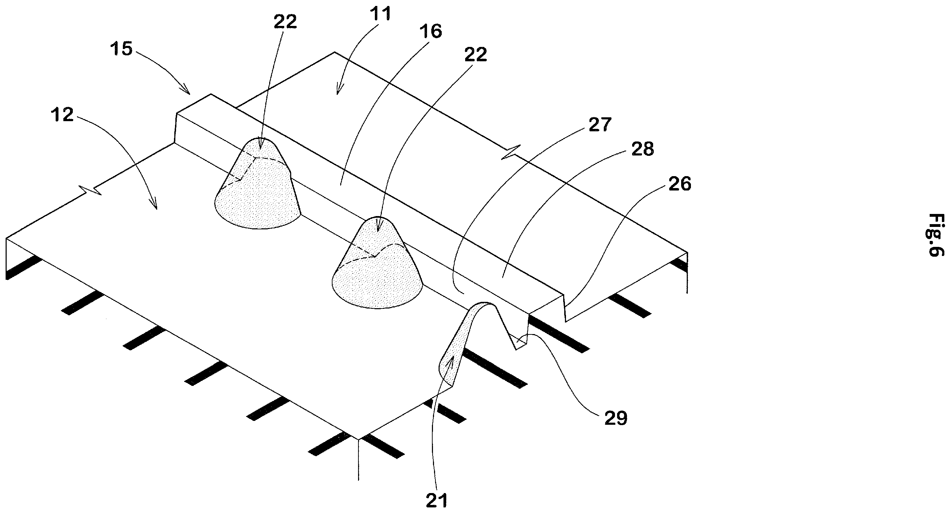

FIG. 6 is an enlarged perspective view conceptually showing the positional relationship between the rib 16 and the plurality of micro projections 13. In FIG. 6, for easy understanding of the positional relationship, only one rib 16 and three micro projections 13 are shown, but it is needless to say that many micro projections 13 are actually arranged so as to be adjacent to the rib 16. In FIG. 6, the outer face of each micro projection 13 is dotted.

As shown in FIG. 6, the plurality of micro projections 13 may include first projections 21 that are not directly connected to the rib 16 and second projections 22 that are partially connected to the rib 16. On the other hand, the rib 16 includes a first side surface 26 on the first region 11 side, a second side surface 27 on the second region 12 side, and a top face 28 between the first side surface 26 and the second side surface 27. The first projection 21 is not connected to any of the surfaces of the rib 16. However, the smaller a gap 29 between the rib 16 and the first projection 21 is, the larger the contrast between the rib 16 and the second region 12 is. From this viewpoint, the length of the gap 29 (minimum length between the first projection 21 and the rib 16 at the root) is preferably smaller than a minimum width of the top face 28 of the rib 16.

Meanwhile, each second projection 22 is connected only to the second side surface 27 of the rib 16, or to both the second side surface 27 and the top face 28. Preferably, the second projection 22 is, at least, not connected to the first side surface 26. Accordingly, the first side surface 26 can be clearly observed as a contour line of the mark 10, an increase in cost in design or processing of a vulcanization mold for a tire can be avoided, and the appearance of the mark 10 (shown in FIG. 1) can also be improved.

Although the tire according to one embodiment of the present invention has been described in detail above, the present invention is not limited to the above specific embodiment, and various modifications can be made within the scope of the appended claims.

## Claims

1. A pneumatic tire (1) comprising a pair of sidewall portions (3), wherein
at least one of outer surfaces of the pair of sidewall portions (3) includes at least one marking portion (5),
the marking portion (5) includes a first region (11) forming a mark (10) including at least one character, at least one graphic, or at least one symbol, a second region (12) that is a background portion of the mark (10), and a fringing portion (15) that demarcates the first region (11) from the second region (12) and fringes a contour of the mark (10),
the first region (11) is formed as a smooth surface,
the second region (12) is a projection-recess region where a plurality of micro projections (13) are arranged, and
the fringing portion (15) is a rib (16) projecting from the first region (11),
**characterized in that**
a maximum height (h2) of the rib (16) with respect to the first region (11) is 10% to 80% of a maximum height (h1) of the plurality of micro projections (13) with respect to the first region (11).

2. The pneumatic tire (1) according to claim 1, wherein the marking portion (5) is recessed with respect to a reference surface (3s) of the outer surface of the sidewall portion (3).

3. The pneumatic tire (1) according to claim 2, wherein a recessed amount (d1) of the marking portion (5) with respect to the reference surface (3s) is not larger than 1.5 mm.

4. The pneumatic tire (1) according to any one of claims 1 to 3, wherein one to four micro projections (13) are arranged per mm² in the second region (12).

5. The pneumatic tire (1) according to any one of claims 1 to 4, wherein the second region (12) includes a portion where the plurality of micro projections (13) are arranged so as to form closest packing in a planar view.

6. The pneumatic tire (1) according to any one of claims 1 to 5, wherein
each of the plurality of micro projections (13) has a first maximum outer diameter (D1) in a planar view,
the rib (16) has a maximum rib width (W1) orthogonal to a longitudinal direction thereof, and
the rib width (W1) is larger than 1/2 of the first maximum outer diameter (D1).

7. The pneumatic tire (1) according to claim 6, wherein the rib width (W1) is smaller than the first maximum outer diameter (D1).

8. The pneumatic tire (1) according to any one of claims 1 to 7, wherein the plurality of micro projections (13) include a first projection (21) that is not directly connected to the rib (16) and a second projection (22) that is partially connected to the rib (16).

9. The pneumatic tire (1) according to claim 8, wherein
the rib (16) includes a first side surface (26) on the first region (11) side, a second side surface (27) on the second region (12) side, and a top face (28) between the first side surface (26) and the second side surface (27), and
the second projection (22) is connected only to the second side surface (27) of the rib (16), or to both the second side surface (27) and the top face (28).

10. The pneumatic tire (1) according to claim 9, wherein the second projection (22) is not connected to the first side surface (26).

## Patentansprüche

1. Luftreifen (1), der ein Paar von Seitenwandabschnitten (3) umfasst, wobei
zumindest eine von Außenflächen des Paares der Seitenwandabschnitte (3) zumindest einen Markierungsabschnitt (5) aufweist,
der Markierungsabschnitt (5) einen ersten Bereich (11), der eine Markierung (10) bildet, welche zumindest einen Buchstaben, zumindest eine Grafik oder zumindest ein Symbol umfasst, einen zweiten Bereich (12), der ein Hintergrundabschnitt der Markierung (10) ist, und einen Umsäumungsabschnitt (15) umfasst, der den ersten Bereich (11) von dem zweiten Bereich (12) abgrenzt und eine Kontur der Markierung (10) umsäumt,
der erste Bereich (11) als eine glatte Fläche gebildet ist,
der zweite Bereich (12) ein Vorsprungs-Vertiefungsbereich ist, in welchem mehrere Mikrovorsprünge (13) angeordnet sind, und
der Umsäumungsabschnitt (15) eine Rippe (16) ist, die von dem ersten Bereich (11) hervorsteht,
**dadurch gekennzeichnet, dass**
eine maximale Höhe (h2) der Rippe (16) bezogen auf den ersten Bereich (11) 10% bis 80% einer maximalen Höhe (h1) der mehreren Mikrovorsprünge (13) bezogen auf den ersten Bereich (11) beträgt.

2. Luftreifen (1) nach Anspruch 1, wobei der Markierungsabschnitt (5) bezogen auf eine Referenzfläche (3s) der Außenfläche des Seitenwandabschnitts (3) vertieft ist.

3. Luftreifen (1) nach Anspruch 2, wobei ein Vertiefungsbetrag (d1) des Markierungsabschnitts (5) bezogen auf die Referenzfläche (3s) nicht größer als 1,5 mm ist.

4. Luftreifen (1) nach einem der Ansprüche 1 bis 3, wobei eins bis vier Mikrovorsprünge (13) pro mm² in dem zweiten Bereich (12) angeordnet sind.

5. Luftreifen (1) nach einem der Ansprüche 1 bis 4, wobei der zweite Bereich (12) einen Abschnitt umfasst, in welchem die mehreren Mikrovorsprünge (13) derart angeordnet sind, dass sie in einer Draufsicht eine dichteste Packung bilden.

6. Luftreifen (1) nach einem der Ansprüche 1 bis 5, wobei
jeder der mehreren Mikrovorsprünge (13) in einer Draufsicht einen ersten maximalen Außendurchmesser (D1) aufweist,
die Rippe (16) rechtwinklig zu einer Längsrichtung von dieser eine maximale Rippenbreite (W1) aufweist und
die Rippenbreite (W1) größer als 1/2 des ersten maximalen Außendurchmessers (D1) ist.

7. Luftreifen (1) nach Anspruch 6, wobei die Rippenbreite (W1) kleiner als der erste maximale Außendurchmesser (D1) ist.

8. Luftreifen (1) nach einem der Ansprüche 1 bis 7, wobei die mehreren Mikrovorsprünge (13) einen ersten Vorsprung (21), der nicht direkt mit der Rippe (16) verbunden ist, und einen zweiten Vorsprung (22) umfassen, der teilweise mit der Rippe (16) verbunden ist.

9. Luftreifen (1) nach Anspruch 8, wobei
die Rippe (16) eine erste Seitenfläche (26) auf der Seite des ersten Bereichs (11), eine zweite Seitenfläche (27) auf der Seite des zweiten Bereichs (12) und eine Oberseitenfläche (28) zwischen der ersten Seitenfläche (26) und der zweiten Seitenfläche (27) aufweist und
der zweite Vorsprung (22) nur mit der zweiten Seitenfläche (27) der Rippe (16) oder mit beiden von der zweiten Seitenfläche (27) und der Oberseitenfläche (28) verbunden ist.

10. Luftreifen (1) nach Anspruch 9, wobei der zweite Vorsprung (22) nicht mit der ersten Seitenfläche (26) verbunden ist.

## Revendications

1. Pneumatique (1) comprenant une paire de parties flanc (3), dans lequel
au moins une des surfaces extérieures de la paire de parties flanc (3) inclut au moins une partie de marquage (5),
la partie de marquage (5) inclut une première région (11) formant une marque (10) incluant au moins un caractère, au moins un graphique ou au moins un symbole, une seconde région (12) qui est une partie d'arrière-plan de la marque (10), et une partie de bordure (15) qui délimite la première région (11) de la seconde région (12) et borde un contour de la marque (10),
la première région (11) est formée comme une surface lisse,
la seconde région (12) est une région de saillies et de creux dans laquelle sont disposées une pluralité de micro-saillies (13), et
la partie de bordure (15) est une nervure (16) faisant saillie à partir de la première région (11),
**caractérisé en ce**
**qu'**une hauteur maximale (h2) de la nervure (16) par rapport à la première région (11) est comprise entre 10 % et 80 % d'une hauteur maximale (h1) de la pluralité de micro-saillies (13) par rapport à la première région (11).

2. Pneumatique (1) selon la revendication 1, dans lequel la partie de marquage (5) est en retrait par rapport à une surface de référence (3s) de la surface externe de la partie flanc (3).

3. Pneumatique (1) selon la revendication 2, dans lequel une valeur de retrait (d1) de la partie de marquage (5) par rapport à la surface de référence (3s) n'est pas supérieure à 1,5 mm.

4. Pneumatique (1) selon l'une quelconque des revendications 1 à 3, dans lequel une à quatre micro-saillies (13) sont disposées par mm² dans la seconde région (12).

5. Pneumatique (1) selon l'une quelconque des revendications 1 à 4, dans lequel la seconde région (12) inclut une partie où la pluralité de micro-saillies (13) sont disposées de manière à former un garnissage le plus dense possible dans une vue plane.

6. Pneumatique (1) selon l'une quelconque des revendications 1 à 5, dans lequel
chacune de la pluralité de micro-saillies (13) a un premier diamètre extérieur maximal (D1) dans une vue plane,
la nervure (16) a une largeur de nervure maximale (W1) orthogonale à une direction longitudinale de celle-ci et
la largeur de nervure (W1) est supérieure à la moitié du premier diamètre extérieur maximal (D1).

7. Pneumatique (1) selon la revendication 6, dans lequel la largeur de nervure (W1) est inférieure au premier diamètre extérieur maximal (D1).

8. Pneumatique (1) selon l'une quelconque des revendications 1 à 7, dans lequel la pluralité de micro-saillies (13) inclut une première saillie (21) qui n'est pas directement reliée à la nervure (16) et une seconde saillie (22) qui est partiellement reliée à la nervure (16).

9. Pneumatique (1) selon la revendication 8, dans lequel
la nervure (16) inclut une première surface latérale (26) du côté de la première région (11), une seconde surface latérale (27) du côté de la seconde région (12) et une face supérieure (28) entre la première surface latérale (26) et la seconde surface latérale (27), et
la seconde saillie (22) est reliée uniquement à la seconde surface latérale (27) de la nervure (16) ou à la fois à la seconde surface latérale (27) et à la face supérieure (28).

10. Pneumatique (1) selon la revendication 9, dans lequel la seconde saillie (22) n'est pas reliée à la première surface latérale (26).
